# EUROPEAN PATENT APPLICATION

(11) **EP 3 173 985 A1**
(43) Date of publication of application: **31.05.2017**
(21) Application number: 15306863.0
(22) Date of filing: 25.11.2015
(51) Int. Cl.: G06Q 10/00

(54) **METHOD AND APPARATUS FOR GENERATING A COMBINED CALENDAR**

(71) Applicant: Thomson Licensing, 92130 Issy-les-Moulineaux (FR)
(72) Inventor: Borsum, Malte, 30655 Hannover (DE)
(74) Representative: Huchet, Anne

(57) **Abstract**

A method, a computer readable storage medium and an apparatus 2 for generating a combined calendar are described. In formation of at least two calendars are received, each of which includes several events that is associated with at least one attribute. The attributes of the events are compared. Events are considered identical when they have at least one identical attribute. A common visual representation of the at least two calendars are generated. The identical events are represented as a single calendar object in the common visual representation.

## Description

### TECHNICAL FIELD

The present disclosure relates to a method and an apparatus for generating a combined calendar. Furthermore, a computer readable storage medium for such a method and an apparatus is also disclosed.

### BACKGROUND

The merging of calendars occurs for example in a family or in a working group, wherein each person has one or more individual calendars and all calendars are accessible by the family or group members. In a typical situation when multiple calendars are combined in one single view, each calendar is attributed respectively with its own distinctive color or specific visual representations. This difference can sometimes be chosen by the user or owner of the respective calendar.

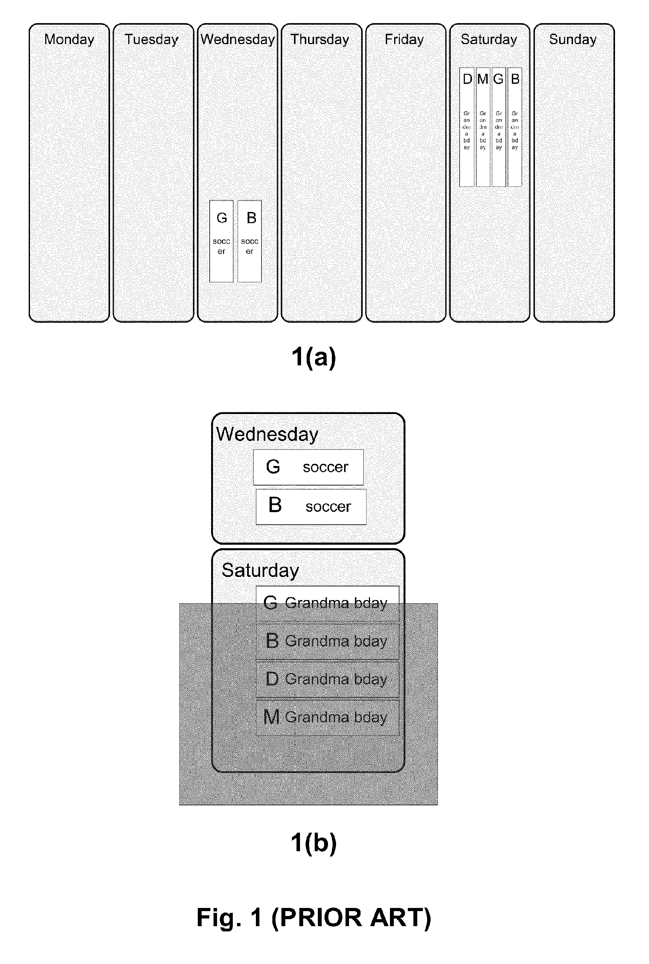

It is often configurable which subset of calendars should be integrated in the common view. When shared appointments are scheduled in a combined calendar or a multiple-calendar view, they are normally shown as multiple items in the merged view, which results in some problems and inconvenience. In a typical situation the multiple appointments of the individual users can be shown with different colors or visual representations and are cluttered next to each other in the common view. For example, Fig. 1 shows a weekly calendar for a family including four members, Dad (D), Mom (M), a girl child (G) and a boy child (B). There is a common event (soccer) for the girl and the boy on Wednesday, and a common event (Grandma's birthday) for the whole family on Saturday. However, as shown in Fig. 1(a), the screen layout renders the text portion of the calendar items rather tiny and unreadable, because there is no enough space on the display available for each respective event.

Furthermore, sometimes the display area or the screen to show the calendar is limited, for example, with a limited height. In this case only a limited number of events can be displayed at a same time, as illustrated in Fig. 1(b) In this case, the calendar events are displayed as an agenda review with all the events on the same day are cluttered together. It can be seen that some of the calendar event might be hidden and not be shown. The events being shown behind the oblique hatched area are located outside the display and are therefore invisible for the user. This outlined situation not only renders the display of a multiple calendar view somehow confusing, it might also occur that some of the events cannot be displayed at all, due to limited space and are therefore potentially missed by the user.

### SUMMARY

Therefore, it is an object to provide an improved solution for generating a combined calendar, wherein merging of calendar entries should be more flexible and more robust with respect to identification of similar or identical calendar items or objects.

The object is solved by a method for generating a combined calendar, comprising:
- receiving information of at least two calendars, each calendar including several events, each event being associated with at least one attribute;
- comparing attributes of the events in the at least two calendars, wherein events are considered identical when they have at least one identical attribute; and
- generating a common visual representation of the at least two calendars, wherein the identical events from the respective calendars are represented jointly as a single calendar object in the common visual representation.

Advantageously, identical events are found by comparison of attributes of the events. Furthermore, when identical calendar events are detected, only one of them is displayed in the calendar or in the agenda for visualization of the event. This is performed more or less exactly the same way as if there would be only that one single calendar item/object. A calendar item or object refers to, for example, a visual graphical item or icon that is shown in the visual representation of the calendars. Some extra information or highlight can be added to the common calendar object corresponding to identical calendar events. This can inform and remind the user that the calendar event come from multiple sources. The merged, single and common calendar object is for example provided with an extra text line. It can further have a different text style, a special color or marker. For example, dots, patterns or a hatching can be applied. The common calendar object requires the same or a comparable display space or area like a single event does. Hence, problems with respect to insufficient or incomplete display of multiple appointments, which is due to the limited area of the display, are avoided.

In an advantageous embodiment of the invention, the method further comprises defining a set of selected attributes to be compared, wherein comparing attributes of the events comprises comparing the selected attributes of the events, if available for the event.

There can be a subset of selected attributes of the events, which are applied for finding identical events among different calendar sources. This subset can be predefined or user definable. The selected attributes can be the most common attributes, for example starting time, duration, end time, etc.

In one embodiment, the method further comprises calculating hash values for the attributes of the calendar events. The comparison of the attributes of the events is accordingly based on the hash value. A hash value can be easily and robustly calculated from the information of the calendar events and varies when there are even minor changes of the information. Therefore, the comparison of the attributes of the events according to hash values can easily reflect and clarify whether there is a match or not.

In one embodiment, the method further comprises establishing a similarity measure among the events of the calendars. For example, a floating point value can be calculated to identify the likelihood between any two of the calendar events. Particularly in the case where the events are associated with several attributes, this approach can be applied to the events one by one, and the results can be combined by e.g. multiplication or addition. The comparison of the attributes of the events is accordingly performed based on the similarity measure, and events are considered identical if the similarity measure exceeds a predetermined threshold. Of course, the establishment of the similarity measure can be automatically performed by a device where users of the calendars can define the parameters and rules to generate the similarity measure. In other words, a user can configure how strict or loose the comparison should be done among the events of the calendars.

The alternative or combined use of the hash value and the similarity measure for the comparison of the calendar events make the detection of identical events more flexible and more robust.

In still another advantageous embodiment, the method further comprises converting the attributes of the events to be compared into a single and common data format, in particular with respect to character coding of descriptive elements of the events and reference to a time-zone of time data of the events.

The data format of the events is homogenized. This allows comparison of events being coded using for example different character coding or being stored in different time-zones.

The object is further solved by an apparatus for generating a combined calendar, comprising a reception unit and an operation unit. The reception unit is configured to receive information of at least two calendars, each calendar including several events, each event being associated with at least one attribute. The operation unit is configured to compare attributes of the events, wherein events are considered identical when they have at least one identical attribute, and generate a common visual representation of the at least two calendars, wherein the identical events from the respective calendars are represented jointly in a merged, single and common calendar object in the common visual representation.

Advantageously, the apparatus further comprises a user interface unit configured to receive user input indicative of a definition of a set of selected attributes to be compared, wherein the operation unit is further configured to compare the selected attributes of the events, if available for the event.

In one embodiment, the operation unit is configured to calculate hash values for the attributes of the events, wherein the comparison of the attributes of the events is based on the calculated hash values.

In one embodiment, the operation unit is configured to establish a similarity measure among the events of the calendars, wherein the comparison of the attributes of the events is based on the similarity measure. If the similarity measure exceeds a predetermined threshold, the events are considered identical.

In still another advantageous embodiment, the apparatus further comprises a conversion unit configured to convert the attributes of the events to be compared into a single and common data format, in particular with respect to character coding of descriptive elements of the events and reference to a time-zone of time data of the events.

Same or similar advantages, which have been mentioned with respect to the method according to the current principles, apply to the apparatus for generating a combined calendar in the same or similar way.

Also, a computer readable storage medium has stored therein instructions for generating a combined calendar, which when executed by a computer, cause the computer to:
- receive information of at least two calendars, each calendar including several events, each event being associated with at least one attribute;
- compare attributes of the events in the at least two calendars, wherein events are considered identical if they have at least one identical attribute; and
- generate a common visual representation of the at least two calendars, wherein the identical events from the respective calendars are represented jointly as a single object in the common visual representation.

The computer readable storage medium is advantageously further enhanced in that it further comprises instructions, which when executed by a computer, cause the computer to define a set of selected attributes to be compared, wherein the instructions, when executed by a computer, further cause the computer, in the step of comparing attributes, to compare the selected attributes of the events, if available for the event.

In an advantageous embodiment of the invention the computer readable storage medium further comprises instructions, which when executed by a computer, further cause the computer, to calculate hash values for the attributes of the events, wherein the comparison of the attributes of the events is based on the calculated hash values.

In an advantageous embodiment of the invention the computer readable storage medium further comprises instructions, which when executed by a computer, further cause the computer, to establish a similarity measure among the events of the calendars, wherein the comparison of the attributes of the events is based on the similarity measure.

In still another advantageous embodiment the computer readable storage medium is further enhanced in that it further comprises instructions, which when executed by a computer, further cause the computer, to convert the attributes of the events to be compared into a single and common data format, in particular with respect to character coding of descriptive elements of the events and reference to a time-zone of time data of the events.

Similar to the apparatus, same or similar advantages, which have been mentioned with respect to the method, also applied to the computer readable storage medium in the same or similar way and therefore not repeated.

Further characteristics of the current principles will become apparent from the description of the embodiments together with the claims and the included drawings. The embodiments can fulfill individual characteristics or a combination of several characteristics.

### BRIEF DESCRIPTION OF THE DRAWINGS

For a better understanding of the present principles, the proposed solutions shall now be explained in more detail in the following description with reference to the figures. It is understood that the solutions are not limited to the disclosed exemplary embodiments and that specified features can also expediently be combined and/or modified without departing from the scope of the proposed solutions as defined in the appended claims and exhibited in the figures.
- Fig. 1: shows examples of conventional combined calendars according to the prior art.
- Fig. 2: is a flow chart schematically illustrating an embodiment of a method for generating a combined calendar.
- Fig. 3: schematically illustrates the detailed steps for the comparison of calendar events in a method for generating a combined calendar according to the current principles.
- Fig. 4: shows exemplary embodiments of the visual representation of the combined calendar according to the current principles.
- Fig. 5: is a schematic diagram depicting one embodiment of an apparatus for generating a combined calendar introduced in the present principles.

In the drawings, the same or similar types of elements or respectively corresponding parts are provided with the same reference numbers in order to prevent the item from needing to be reintroduced.

### DETAILED DESCRIPTION OF PREFERRED EMBODIMENTS

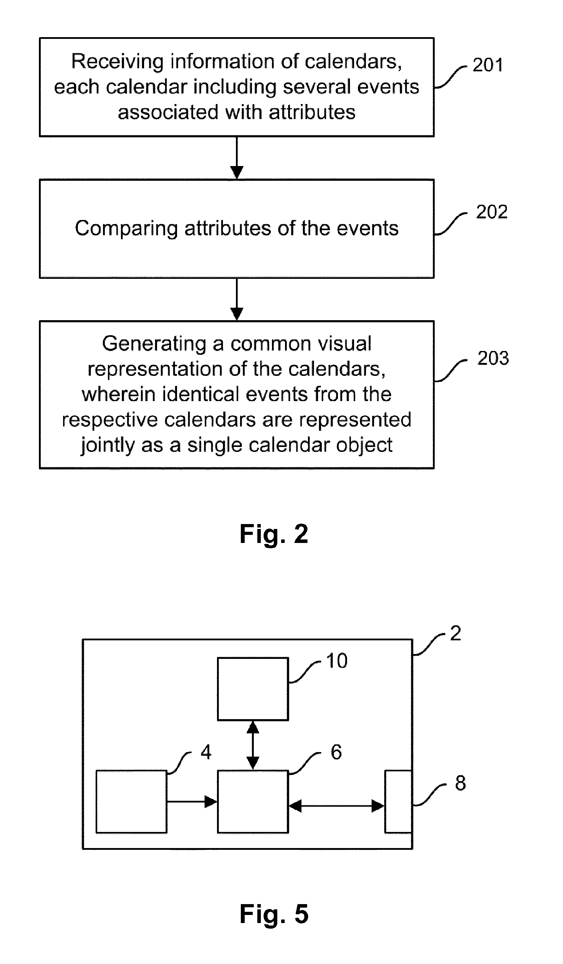

As shown in Fig. 2, an embodiment for the method of generating a combined calendar is schematically illustrated. The method comprises receiving 201 information of at least two calendars. Each calendar includes several events, and each event is associated with at least one attribute. The method further comprises comparing 202 attributes of the events in the at least two calendars, wherein events are considered identical when they have at least one identical attribute. A common visual representation of the at least two calendars is then generated 203, wherein the identical events from the respective calendars are represented jointly as a single calendar object in the common visual representation. Hereinafter, a calendar object refers to, for example, a visual graphical item or icon that is shown in the visual representation of the calendars.

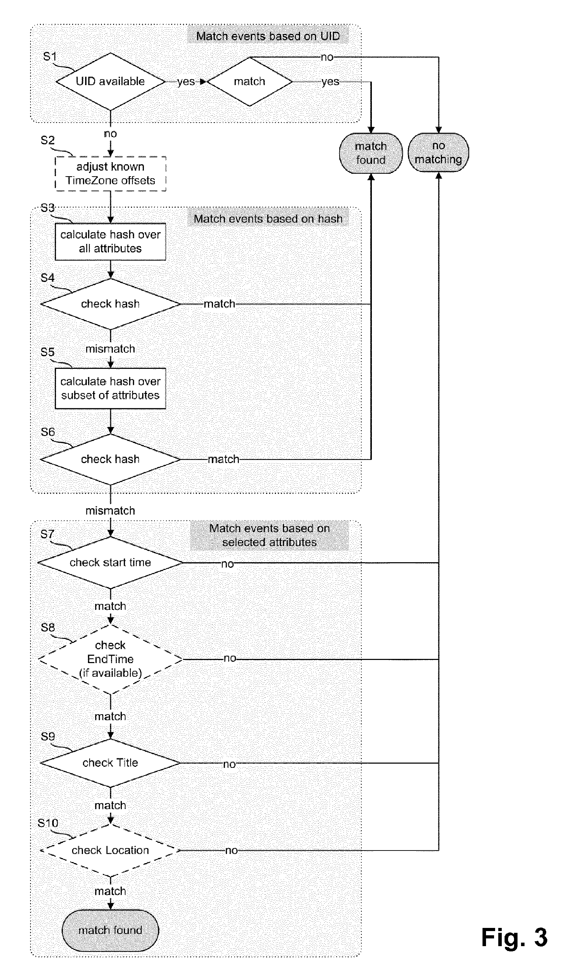

The comparison 202 of the attributes of the events can be performed in many ways. Fig. 3 shows further details of some exemplary methods that can be applied and used in the embodiments of the current principles. As shown in step S1 of Fig. 3, in the case when the calendar events are associated with unique identifiers (referred to as UID), identical events can be matched and found by comparing the UIDs of the calendar events.

Nevertheless, the focuses and advantages of the method for generating a combined calendar according to the current principles are on calendar events and information that is not associated with unique identifiers (UIDs). In the case where the UIDs are not available or different due to different handling by different calendar providers, the comparison 202 of the attributes of the events can be performed, for example, by the steps S2-S10 as shown in Fig. 3.

Firstly, the attributes of the calendar events to be compared are converted into a single and common data format. In particular, this applies to their reference to a certain time-zone. As shown in step S2, all the events are adjusted to an identical time-zone, for example UTC.

Subsequently, a hash value is calculated over all attributes available for the events to be compared (step S3). The hash values are compared in step S4 and if a match can be found, the events are considered identical (branch "match"). If no match can be found a hash value is calculated based on a subset of selected attributes (step S5). This selected attributes to be compared can be predefined by a user or automatically by an apparatus or device. Again the hash values are compared (step S6) and if a match can be found (branch "match") the events are also considered identical.

If the calculation of the hash values does not lead to a matching event, the two or more calendars and the calendar events can be compared based on certain selected attributes. For example, in step S7, the starting time is compared. In addition to this, the end time, if available, will be checked in step S8. Also the title of the calendar entry and the location of the calendar event can be compared (steps S9 and S10) if available. If anyone of these attributes does not match, the calendar entries will be directly considered not matching (see branches directed to the right). If all attributes are cumulatively matched, the two calendar events will be considered a match.

After two matching events have been found from the received at least two calendars, a common visual representation of the at least two calendars is generated 203. In other words, a common visual representation is generated to illustrate a combined calendar that is composed of the at least two calendars. In this common visual representation, the identical events from the respective calendars are represented as a single calendar object.

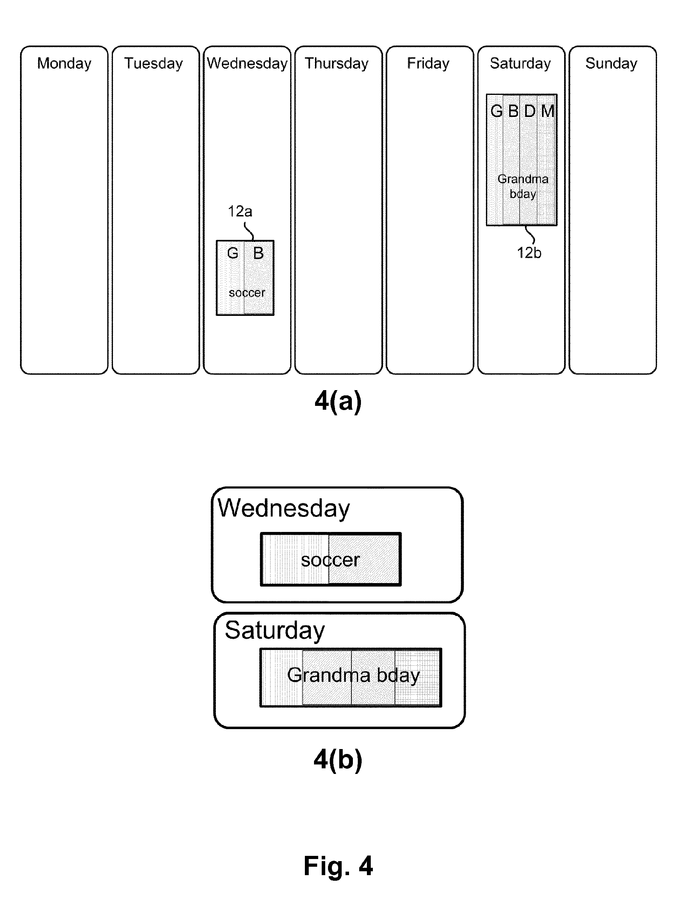

Fig. 4 shows an exemplary embodiment of the visual representation of the combined calendar, which is explained in detail in the following with respect to the conventional representation as shown in Fig. 1. Fig. 4(a) shows a simple visual representation of a week overview of the calendars from the family members, Dad (D), Mom (M), a girl child (G) and a boy child (B). There are two merged common calendar objects 12a, 12b. By way of an example, the first calendar object 12a is "soccer training" in the calendar of the boy child and the girl child. Hence, the time block indicating the soccer training is displayed as a hatched rectangle, using for example the symbols "G" and "B". In alternative and/or in addition, the visual representation of the common object can show different patterns, colors or any other available different visual appearances to differentiate and indicate the two sources from the respective calendars.

As shown in Fig. 4(a), the girl's event is represented by a background of vertical stripes, and the boy's event is represented by a background of slashes. The second calendar object 12b: "Grandma's birthday (bday)" is in the all calendars of the family members. It is thus displayed with the four letters "D, M, G, B" and optionally with the backgrounds with different patterns.

Fig. 4(b) shows an agenda review of the calendar events shown in Fig. 4(a) such that the events on the same day are displayed accordingly. Referring to the conventional display in Fig. 1(b), it is clearly shown that the common calendar events for the family members are displayed in a more clear way, which shows to whom the common events belong to. As described above, different member can be represented by different symbols, colors, patterns, backgrounds, and any other suitable representation. Advantageously, this visual representation simplifies the display of a combined calendar, which might have multiple and complex common events. In addition, this visual representation reduces the display or screen space that is required to display the calendar events, which is quite practical and helpful when the combined calendar is used and shown on mobile devices with screen of a limited size.

Referring to Fig. 5, one embodiment of an apparatus 2 for generating a combined calendar is illustrated. The apparatus 2 is for example a computer, a cell phone, a tablet or the like. It comprises a reception unit 4 and an operation unit 6. The reception unit 4 is configured to receive information of at least two calendars. Each calendar includes several events, and each of the events is associated with at least one attribute. The operation unit 6, for example a processing unit (CPU), is configured to compare attributes of the events, wherein events are considered identical when they have at least one identical attribute, and to generate a common visual representation of the at least two calendars, wherein the identical events from the respective calendars are represented jointly as a single calendar object in the common visual representation.

In one embodiment, the operation unit 6 is further configured to calculate a hash value for the attributes of the events, wherein events are considered identical if the hash values are identical.

In one embodiment, the operation unit 6 is further configured to establish a similarity measure between the events based on some similarity metric for the attributes of the events, wherein events are considered identical if the similarity measure exceeds a predetermined threshold.

In one embodiment, the apparatus 2 further comprises a user interface unit 8 configured to receive user input indicative of a definition of a set of selected attributes to be compared. The user interface unit 8 can be, for example, a touch screen and thus has multiple functions. The visual representation of the combined calendar can also be displayed on the user interface unit 8 when it can be used as a display as well. In other words, the user interface unit 8 can serve as a display and as a user interface.

In one embodiment, the apparatus 2 further comprises a conversion unit 10 configured to convert the attributes of the events to be compared into a single and common data format, in particular with respect to character coding of descriptive elements of the events and reference to a time-zone of time data of the events. This function has already been outlined above when making reference to Fig. 3.

When identical calendar events are detected, only one of them or the common visual representation of the plurality of events is visualized. There are various ways to express this in the visual representation. For example, an extra text line with a special text (e.g. "multi event") can be added. Also the names of the source calendars (e.g. "dad + girl child") can be added. A different text style compared to the standard text can be applied (e.g. italic, bolt ...). A special color or color markers, for example dots, can be added. A special foreground or background color for multi events can also be applied. A mix of the foreground and background color as interpolation of the source calendar colors can be used. Furthermore, a special background pattern can be applied for multi events. A background pattern with the source calendar colors, for example in stripes, can be used. This is for example shown in Fig. 4(a) for the first calendar event 12a.

Furthermore, the colors can be taken from the own calendars color, if the event is in own calendar, or from other calendars color in the event is only in other calendars. The colors, patterns, etc. can be used from the source calendar via priority list.

Advantageously, the user may define how strict the comparison is done during detection. When the providers are similar or even the same, stricter comparison can be the choice and a more relaxed comparison when the user experiences wrong detection results. If time off-sets occur or time-zone definitions are missing, the user can easily provide time-zone information. This is stored as extra data.

In particular, the visualization can be configured by the user. As there are several visualizations possible, the user has to select the way he likes most. The user can select between the different ways mentioned before.

All named characteristics, including those taken from the drawings alone, and individual characteristics, which are disclosed in combination with other characteristics, are considered alone and in combination as important to the invention. Embodiments according to the invention can be fulfilled through individual characteristics or a combination of several characteristics.

The foregoing illustrates the principles of the disclosure and it will thus be appreciated that those skilled in the art will be able to devise numerous alternative arrangements which, although not explicitly described herein, embody the principles and are within its scope. It is therefore to be understood that numerous modifications can be made to the illustrative embodiments and that other arrangements can be devised without departing from the scope of the present principle as defined by the appended claims.

## Claims

1. A method for generating a combined calendar, comprising:
receiving information of at least two calendars, each calendar including several events, each event being associated with at least one attribute;
comparing attributes of the events in the at least two calendars, wherein events are considered identical when they have at least one identical attribute; and
generating a common visual representation of the at least two calendars, wherein the identical events from the respective calendars are represented jointly as a single calendar object in the common visual representation.

2. The method of claim 1, further comprising defining a set of selected attributes to be compared, wherein comparing attributes of the events comprises comparing the selected attributes of the events, if available for the event.

3. The method of claim 1, further comprising calculating hash values for the attributes of the events, wherein the comparison of the attributes of the events is based on the calculated hash values.

4. The method of claim 2, further comprising calculating a hash value for each set of selected attributes of the events, wherein the comparison of selected attributes of the events is based on the calculated hash values.

5. The method of one of preceding claims, further comprising establishing a similarity measure among the events of the calendars, wherein the comparison of the attributes of the events is based on the similarity measure.

6. The method of claim 5, wherein the events are considered identical if the similarity measure exceeds a predetermined threshold.

7. The method of one of the preceding claims, further comprising converting the attributes of the events to be compared into a single and common data format, in particular with respect to character coding of descriptive elements of the events and reference to a time-zone of time data of the events.

8. An apparatus (2) for generating a combined calendar, comprising:
a reception unit (4) configured to receive information of at least two calendars, each calendar including several events, each event being associated with at least one attribute; and
an operation unit (6) configured to compare attributes of the events, wherein events are considered identical when they have at least one identical attribute, and generate a common visual representation of the at least two calendars, wherein the identical events from the respective calendars are represented jointly as a single calendar object in the common visual representation.

9. The apparatus (2) of claim 8, further comprising a user interface unit (8) configured to receive user input indicative of a definition of a set of selected attributes to be compared, wherein the operation unit (6) is further configured to compare the selected attributes of the events, if available for the event.

10. The apparatus of claim 8, wherein the operation unit (6) is configured to calculate hash values for the attributes of the events, wherein the comparison of the attributes of the events is based on the calculated hash values.

11. The apparatus of claim 9, wherein the operation unit (6) is configured to calculate a hash value for each set of selected attributes of the events, wherein the comparison of selected attributes of the events is based on the calculated hash values.

12. The apparatus of one of claims 8-11, wherein the operation unit (6) is configured to establish a similarity measure among the events of the calendars, wherein the comparison of the attributes of the events is based on the similarity measure.

13. The apparatus of claim 12, wherein the events are considered identical if the similarity measure exceeds a predetermined threshold.

14. The apparatus of one of claims 8-13, further comprising a conversion unit (10) configured to convert the attributes of the events to be compared into a single and common data format, in particular with respect to character coding of descriptive elements of the events and reference to a time-zone of time data of the events.

15. A computer readable storage medium having stored therein instructions for generating a combined calendar, which when executed by a computer, cause the computer to:
receive information of at least two calendars, each calendar including several events, each event being associated with at least one attribute;
compare attributes of the events in the at least two calendars, wherein events are considered identical if they have at least one identical attribute; and
generate a common visual representation of the at least two calendars, wherein the identical events from the respective calendars are represented jointly as a single calendar object in the common visual representation.
